# FASCICULE DE BREVET EUROPEEN

(11) **EP 0 798 059 B1**
(45) Date de publication et mention de la délivrance du brevet: **30.01.2002**
(21) Numéro de dépôt: 97400519.1
(22) Date de dépôt: 07.03.1997
(51) Int. Cl.: B21K 1/76, B21J 5/02

(54) **Procédé de fabrication d'une ebauche de bielle forgée**
Verfahren zur Herstellung eines Rollings für eine geschmiedete Pleuelstange
Method of production of a blank for a forged connecting rod

(30) Priorité: 29.03.1996 FR 9603941
(43) Date de publication de la demande: 01.10.1997
(73) Titulaire: Ascoforge Safe, 57300 Hagondange (FR); Ascometal, 92800 Puteaux (FR)
(72) Inventeur: Morgen, Paul, 57070 - St Julien Lès Metz (FR); Pecourt, Jean-Claude, 08800 - Hautes Rivières (FR); Robelet, Marc, 57190 Florange (FR)
(74) Mandataire: Jacobson, Claude

(56) Documents cités:
- EP-A- 0 572 246
- EP-A- 0 696 688
- DE-A- 4 329 371
- PATENT ABSTRACTS OF JAPAN vol. 013, no. 193 (M-822), 9 Mai 1989 & JP 01 018544 A (TOYOTA MOTOR CORP), 23 Janvier 1989,
- PATENT ABSTRACTS OF JAPAN vol. 010, no. 118 (M-475), 2 Mai 1986 & JP 60 247432 A (DAIDO TOKUSHUKO KK), 7 Décembre 1985,
- PATENT ABSTRACTS OF JAPAN vol. 009, no. 087 (M-372), 17 Avril 1985 & JP 59 215236 A (OOTSUKA TETSUKOU KK), 5 Décembre 1984,
- PATENT ABSTRACTS OF JAPAN vol. 009, no. 202 (M-405), 20 Août 1985 & JP 60 064741 A (SANYO DENKI KK), 13 Avril 1985,

## Description

La présente invention concerne la fabrication d'une bielle forgée, et notamment d'une bielle forgée pour moteur à combustion interne.

Les bielles forgées, en particulier les bielles forgées pour moteur à combustion interne, notamment lorsqu'elles sont en acier, sont fabriquées par un procédé qui comprend un forgeage à chaud d'une ébauche forgée de bielle, un traitement thermique et un usinage.

Le forgeage comporte plusieurs étapes qui sont, en général, la fabrication d'une pré-ébauche par laminage de forme d'un lopin préalablement chauffé à une température adéquate, l'estampage ou le matriçage de la pré-ébauche, le découpage des bavures de forgeage ou leur arasage et un poinçonnage.

Le traitement thermique qui peut être soit différé, soit fait dans la chaude de forge, dépend, notamment, de la nuance d'acier utilisée et des caractéristiques mécaniques recherchées.

Lorsqu'il est différé, le traitement thermique peut être une normalisation destinée à obtenir une structure perlitique ou ferrito-perlitique. C'est, en particulier, le cas lorsqu'on fabrique des bielles sécables, c'est à dire, lorsqu'on fabrique des bielles dont la tête peut être séparée en deux parties par rupture fragile. Le traitement thermique différé peut, également, être une trempe suivie d'un revenu, destinée à obtenir une structure principalement martensitique dont les caractéristiques mécaniques sont très élevées.

Lorsqu'il est effectué dans la chaude de forge, ce qui suppose que la température de fin de forgeage soit suffisante, le traitement thermique comporte toujours un refroidissement contrôlé, soit suffisamment lent pour obtenir une structure perlitique ou ferrito-perlitique, soit suffisamment rapide afin d'obtenir une structure principalement bainitique. Lorsque la structure recherchée est principalement bainitique, le refroidissement contrôlé peut comporter un maintien destiné à provoquer une transformation sensiblement isotherme. Il peut, également, comporter un réchauffage à une température inférieure à environ 600°C pour produire un effet de revenu. Le revenu peut, aussi, être effectué en différé.

L'usinage comporte principalement le dressage des faces latérales et l'usinage des alésages de la tête et du pieds de la bielle, la séparation de la tête en deux parties, et le perçage des trous destinés à recevoir les vis de fixation des deux parties de la tête. La séparation de la tête en deux parties se fait soit par usinage, soit, lorsque la bielle est sécable, par rupture fragile sous choc.

Pour que l'usinage se fasse dans de bonnes conditions de précision, il est nécessaire de faire un pré-usinage de surfaces de référence à la périphérie de l'ébauche forgée de façon à positionner convenablement l'ébauche sur les machines d'usinage et cette opération est délicate.

Outre les difficultés d'usinage, cette technique a également pour inconvénient de conduire, pour des fabrications de série, à une dispersion des dimensions et du poids des bielles trop importante pour qu'on puisse les monter dans des moteurs sans discernement. Lorsque les poids des bielles d'un même moteur sont trop dispersés, le moteur est mal équilibré. Aussi, avant le montage dans les moteurs, on trie les bielles pour les regrouper par classes étroites de poids. Ces regroupement nécessitent des pesages précis et compliquent les fabrications.

Afin d'améliorer la précision géométrique des ébauches de bielles, il a été proposé, dans la demande de brevet allemande DE 43 29 371, de remplacer le matriçage de la pré-ébauche par un forgeage de la pré-ébauche dans une matrice fermée, par écrasement entre deux inserts munis d'empreintes. L'ébauche obtenue comporte un corps, une tête et un pieds ; la tête et le pieds comportant chacun deux amorces d'alésage séparés par une toile. En fin de forgeage, le mouvement relatif des deux inserts est stoppé lorsque le volume de l'espace délimité par les deux inserts et par la matrice est égal au volume de métal de la pré-ébauche. La précision géométrique et la précision en poids de l'ébauche est alors directement déterminée par la précision en poids de la pré-ébauche. Pour obtenir une ébauche de précision, il est nécessaire d'utiliser une pré-ébauche de précision qui ne peut être obtenue que par usinage, opération très coûteuse pour la fabrication d'une pré-ébauche. De plus, le forgeage de la pré-ébauche se fait avec des déformations importantes du métal, les taux de déformation sont de plusieurs dizaines de %, qui induisent une usure rapide des inserts défavorable à une production en série. Cette technique ne permet pas de calibrer simultanément le corps de la bielle et les alésages.

Le but de la présente invention est de remédier à ces inconvénients en proposant un procédé de fabrication de bielles forgées permettant d'obtenir, en grandes séries, des ébauches de bielles forgées de précision, c'est à dire conduisant, pour une fabrication en série, à une précision dimensionnelle et une précision en poids suffisantes pour qu'il ne soit nécessaire ni de faire un pré-usinage de surfaces de référence, ni de faire un tri par classes de poids avant montage dans un moteur ; ce procédé permettant de calibrer simultanément le corps de la bielle et au moins un alésage.

A cet effet, l'invention a pour objet un procédé de fabrication d'une bielle forgée du type comprenant une tête, un corps et un pied, selon lequel :
- on fabrique par forgeage une ébauche forgée de bielle exempte de bavures latérales et comportant sur la tête et sur le pieds, au moins une amorce d'alésage de l'alésage de la tête et de l'alésage du pied,
- et on calibre en contenu l'ébauche forgée de bielle par écrasement de ladite ébauche forgée de bielle entre deux inserts à l'intérieur d'une matrice, pour obtenir une ébauche de bielle forgée calibrée, la position relative de la matrice et d'un premier insert étant fixée, le deuxième insert étant mobile par rapport à la matrice, en fin de calibrage la position du deuxième insert étant déterminée indépendamment du volume de métal de l'ébauche forgée de bielle, la matrice et le premier insert étant en appui sur le tas d'une presse, le deuxième insert coulissant à l'intérieur de la matrice, l'ensemble constitué par la matrice et les deux inserts comportant au moins un moyen pour recevoir du métal en excédant de l'ébauche forgée de bielle, sans affecter la précision de la forme de l'ébauche de bielle forgée calibrée.
Le deuxième insert comporte une butée qui, en fin de calibrage, vient en appuis sur la matrice, de façon à fixer avec précision la position relative des deux inserts. On calibre au moins l'alésage de la tête, et, éventuellement, l'alésage du pieds, en utilisant une ébauche forgée de bielle dont on a, au préalable, enlevé au moins la toile de la tête, et, éventuellement, la toile du pieds. Le moyen pour recevoir du métal en excédant de l'ébauche forgée de bielle est constitué d'au moins une filière disposée dans la paroi de la matrice et débouchant vers l'extérieur.

Pour calibrer l'alésage de la tête ou du pieds, on peut disposer, dans l'alésage de l'ébauche forgée de bielle, un mandrin pouvant coulisser dans des trous réalisés dans les inserts et situés dans l'axe de l'alésage, puis, on effectue le calibrage.

Enfin, l'ébauche de bielle calibrée peut être soumise à un traitement thermique soit dans la chaude de calibrage, soit différé, avant d'être usinée.

L'invention va maintenant être décrite plus en détails en regard des figures annexées dans les quelles:
- la figure 1 représente une bielle, vue de dessus,
- la figure 2 est une vue en coupe longitudinale d'une bielle,
- la figure 3 représente une pré-ébauche obtenue par laminage de forme,
- la figure 4 est une vue en perspective d'une ébauche forgée de bielle avant ébavurage et poinçonnage,

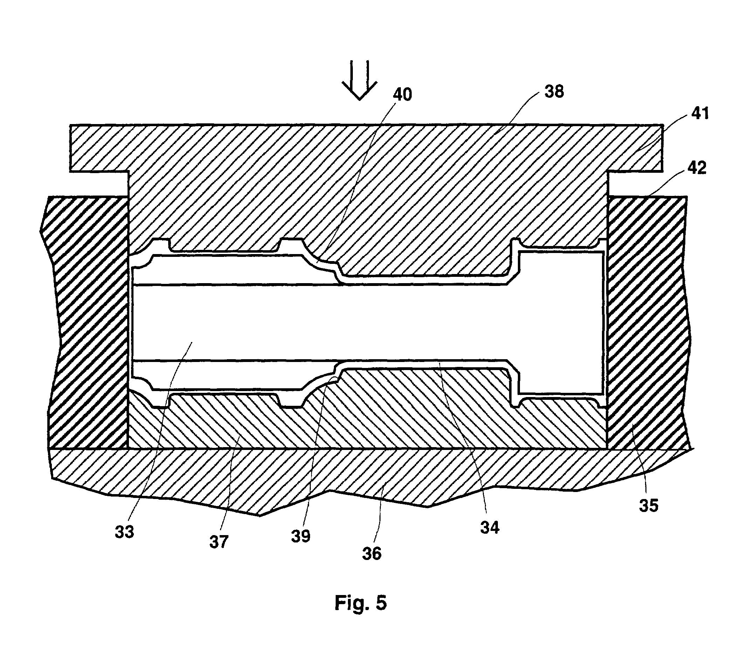

- la figure 5 est une vue en coupe d'un dispositif de calibrage en contenu contenant une ébauche forgée de bielle ,
- la figure 6 est une vue en coupe d'un dispositif de calibrage en contenu, en fin de calibrage, contenant une ébauche de bielle forgée calibrée qui n'a pas été détoilée,
- la figure 7 est une vue en coupe d'un dispositif de calibrage en contenu, en fin de calibrage, contenant une ébauche de bielle forgée calibrée dont les alésages sont calibrés,

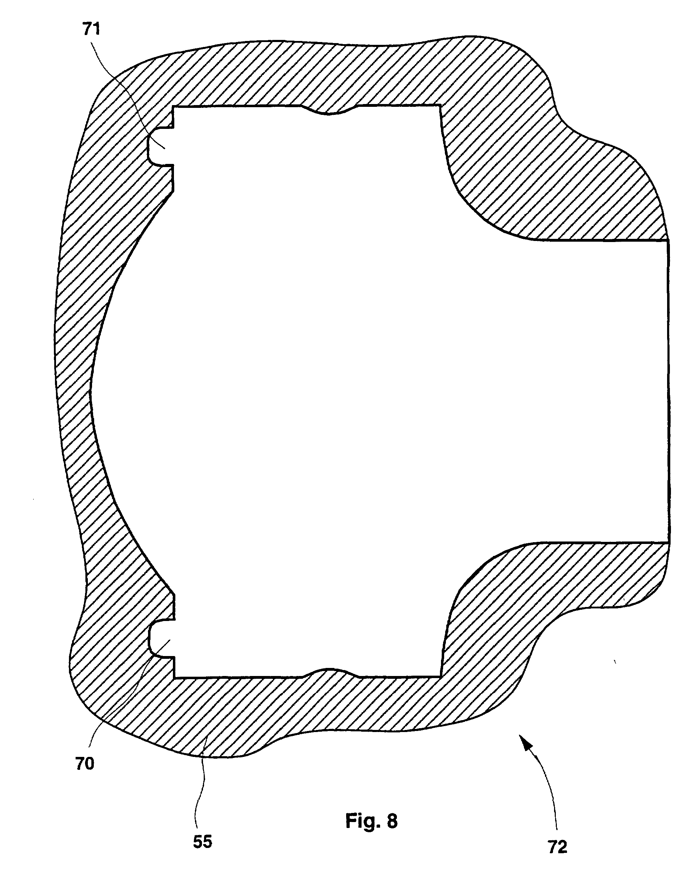

- la figure 8 est une vue de dessus partielle d'une matrice de calibrage,
- la figure 9 est un diagramme montrant les principales opérations de fabrication d'une bielle forgée calibrée.

Avant de décrire le procédé de fabrication selon l'invention, on va préciser ce qu'on entend par ébauche de bielle forgée calibrée de précision.

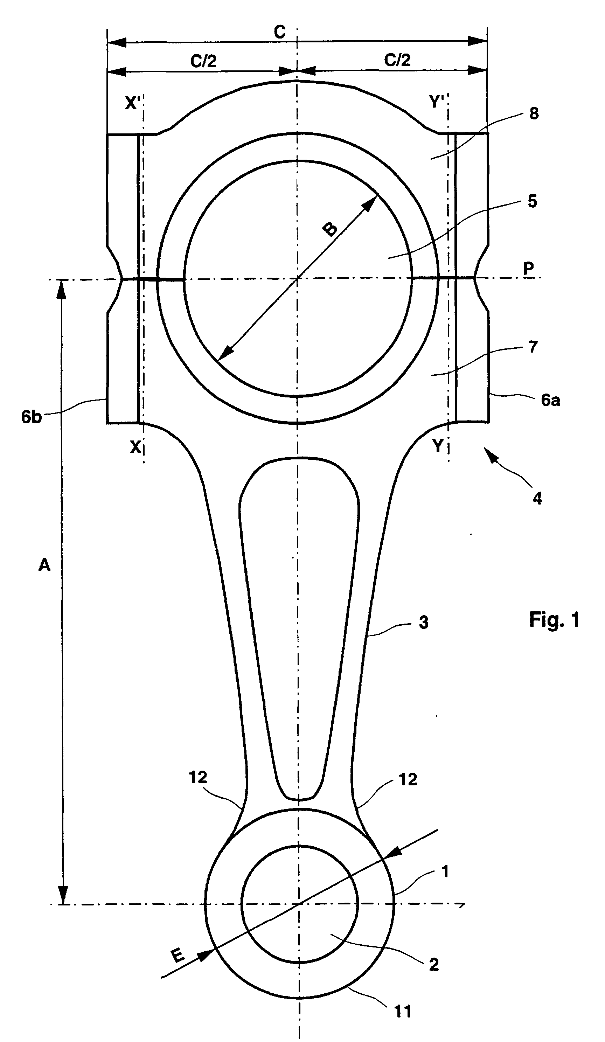

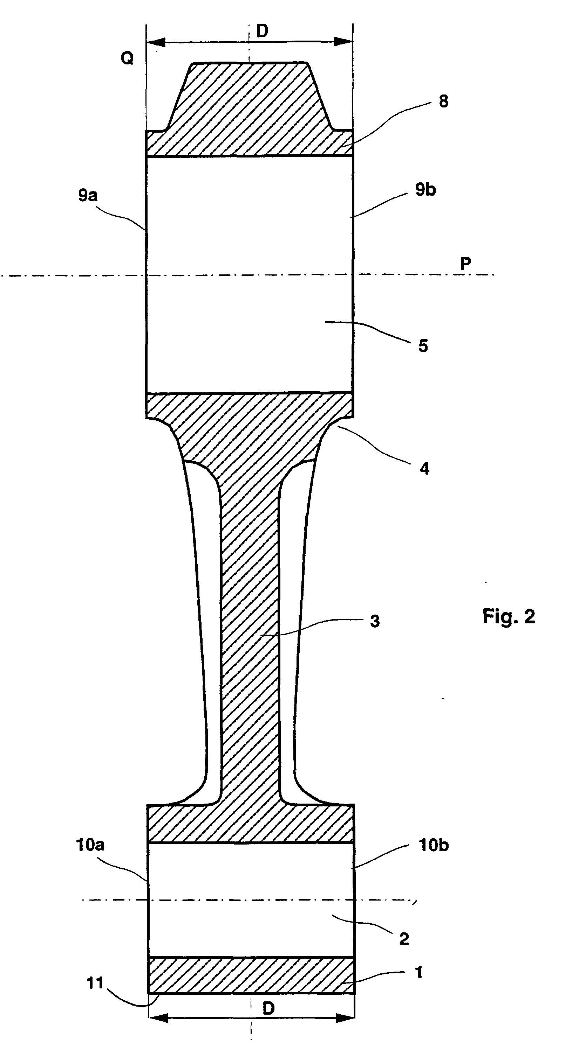

La bielle, représentée aux figures 1 et 2, est constituée d'un pieds 1 comportant un alésage 2, d'un corps 3 et d'une tête 4 comportant un alésage 5 et deux oreilles 6a, 6b. La tête 4 est constituée d'une première partie 7 venue de matière avec le corps 3 et le pieds 1, et d'un chapeau 8, séparé de la partie 7 le long du plan P, et fixé à la partie 7 par des vis (non visibles sur la figure) disposées dans des trous percés selon les axes XX' et YY' dans les oreilles 6a et 6b.

La précision de la bielle est définie d'une part par la dispersion sur le poids qui doit être inférieur à 0,7% pour une bielle de précision, et, d'autre part, par des paramètres géométriques qui sont, en particulier
- la planéité, c'est à dire, le fait que les faces latérales de la tête 9a, 9b, et du pieds 10a, 10b, sont dans le même plan,
- la perpendicularité de la surface circonférencielle 11 et des faces latérales 10a et 10b du pieds,
- l'entre axe A entre la tête et le pieds,
- l'épaisseur D de la tête et du pieds,
- la largeur C de la tête,
- le diamètre B de l'alésage de la tête,
- le centrage de l'alésage de la tête par rapport à la largeur de la tête,
- la régularité de la surface circonférencielle 11 du pieds,
- la forme des zones 12 de raccordement du corps 3 et du pieds 1.

La bielle est fabriquée par usinage à partir d'une ébauche de bielle forgée calibrée dont la forme est très proche de celle de la bielle représentée aux figures 1 et 2. L'ébauche de bielle forgée calibrée se distingue de la bielle finie par les caractéristiques suivantes :
- alors que la bielle comporte deux pièces, l'ébauche de bielle forgée calibrée est en une seule pièce, la séparation en deux pièces se fait après usinage,
- les surfaces actives de l'ébauche de bielle forgée calibrée ne sont pas usinées, et, parfois, les alésages de la tête et du pieds ne sont pas complètement percés,
- l'ébauche de bielle forgée calibrée ne comporte pas de trous pour la fixation du chapeau sur le reste de la bielle.

Cependant, ces différences sont secondaires pour la compréhension de la suite, aussi, pour décrire l'usinage, on se référera aux fig 1 et 2.

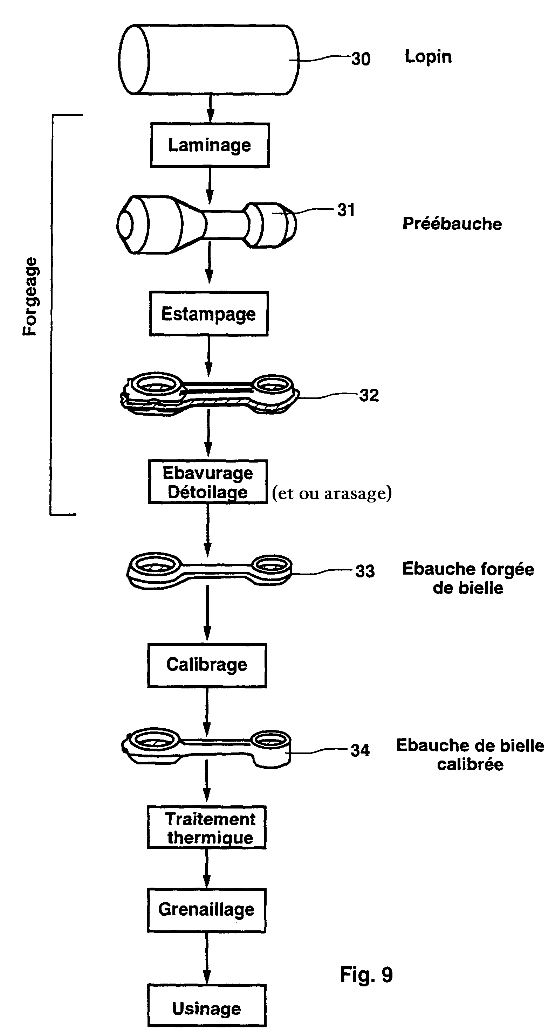

On va maintenant décrire plus en détails le procédé de fabrication d'une bielle, dont les principales étapes, représentées à la figure 9.

Dans un demi produit, qui peut être, par exemple, une billette ou une barre ronde, on découpe un lopin 30 par sciage ou par cisaillage, à froid ou à chaud.

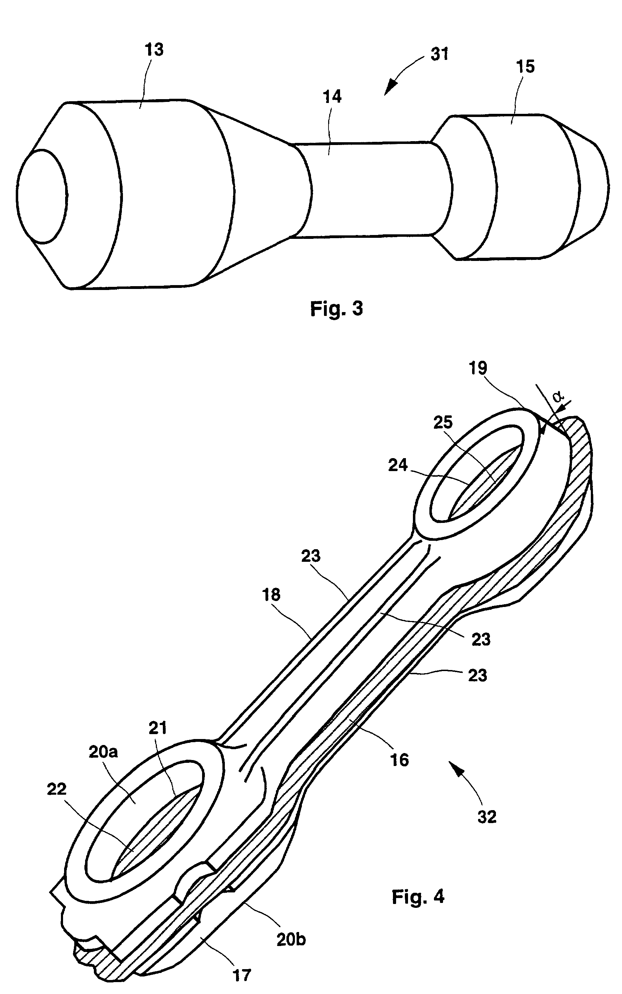

Après réchauffage, par exemple par induction, de préférence sous atmosphère contrôlée pour limiter la formation de calamine, à une température de préférence supérieure à AC₃, et mieux encore comprise entre 1050°C et 1350°C, on effectue un laminage de préforme du lopin 30 pour obtenir une pré-ébauche 31 comportant (figure 3) à une extrémité une partie massive 13 destinée à devenir la tête de la bielle, au centre une partie étirée 14 qui deviendra le corps de la bielle, et à l'autre extrémité une partie 20, moins massive que la partie massive 13, dans la quelle sera formé le pieds de la bielle. Le laminage de préforme se fait soit par laminage longitudinal à l'aide d'un laminoir à rouleaux comportant des préformes, soit par laminage transversal. Pour améliorer la productivité, on peut fabriquer simultanément deux pré-ébauches accolées par l'une de leurs extrémités puis les séparer par sciage.

La pré-ébauche est alors forgée, soit par matriçage, soit par estampage, en général dans deux ou trois empreintes successives. Pour obtenir une ébauche 32 comportant (figure 4) une bavure 16 à sa périphérie et constituée d'une tête 17, d'un corps 18 et d'un pieds 19. La tête 17 comporte sur chacune de ses faces latérales 20a, 20b, une amorce d'alésage 21 (une seule visible sur la figure). Les deux amorces d'alésage 21, disposées en regard l'une de l'autre, sont séparées par une toile 22. Le corps 18 comporte, en général, des nervures longitudinales 23 et une toile (non visible sur la figure). Le pieds 19 comporte deux amorces d'alésage 24, en regard l'une de l'autre, et séparées par une toile 25. La géométrie de cette ébauche est caractérisée, notamment, par des dépouilles (par exemple, angle α représenté à la figure 4) d'au moins 3°.

La bavure périphérique 16 de l'ébauche 32 est enlevée par découpage et, éventuellement, la toile 22, séparant les amorces d'alésage 21 de la tête 17, est enlevée par poinçonnage. La toile 25, séparant les amorces d'alésage 24 du pieds 19, peut également être enlevée par poinçonnage. On obtient ainsi une ébauche forgée de bielle 33. Ces opérations peuvent, éventuellement, être complétées par un arasage qui permet d'enlever tout ou partie des dépouilles inutiles.

L'ébauche forgée de bielle 33 est alors calibrée en contenu pour obtenir une ébauche de bielle forgée calibrée 34 qui est soumise à un traitement thermique puis usinée afin d'obtenir une bielle de précision, c'est à dire une bielle dont les tolérances sur la géométrie externe sont inférieures à 0,3 mm, et sur le poids, inférieures à 0,7%. L'opération de calibrage en contenu sera décrite en détail plus loin.

Après calibrage, et avant usinage, l'ébauche de bielle forgée calibrée 34 peut être soumise à un traitement thermique suivi, éventuellement, d'un grenaillage. Le grenaillage sert d'une part à enlever la calamine et d'autre part à créer des contraintes superficielles de compression.

Les bielles sont, en général, en acier au carbone ou en acier faiblement allié, c'est à dire contenant moins de 10% en poids d'éléments d'alliage. Selon les applications, on cherche à leur conférer une structure soit essentiellement perlitique, soit ferrito-perlitique, soit essentiellement bainitique, et le traitement thermique est choisi en fonction d'une part de la structure souhaitée, d'autre part de la nature de l'acier. L'Homme du Métier sait faire ce choix.

Les structures essentiellement perlitiques sont obtenues avec des aciers contenant environ de 0,6% à 0,75% de carbone. Elles ont l'avantage de permettre d'obtenir des bielles sécables. Le traitement thermique consiste en un refroidissement contrôlé à une vitesse inférieure à 10°C/s à partir d'une température à la quelle l'acier a une structure austénitique.

Les structures ferrito-perlitiques sont obtenues dans les mêmes conditions que précédemment, mais en utilisant un acier contenant moins de 0,4% de carbone. Il est également possible d'obtenir des bielles sécables, notamment, en ajoutant à l'acier de 0,04 à 0,2% en poids de phosphore.

Les structures bainitiques sont obtenues par un refroidissement contrôlé à une vitesse supérieure ou égale à 0,5°C/s pour obtenir au moins 60% de bainite, à partir d'une température à la quelle l'acier a une structure austénitique. Ce refroidissement peut comporter un maintien dans un domaine de température intermédiaire de façon à réaliser une transformation sensiblement isotherme pour obtenir une bainite inférieure. Le refroidissement contrôlé peut être complété soit par un réchauffage à une température inférieure à 600°C en fin de refroidissement, soit par un revenu effectué après retour à la température ambiante. Les aciers utilisés sont, en général, soit du type XC70, soit du type 45M5 ou 38MSV5, et ils peuvent contenir également une addition de 0,04% à 0,2% en poids de phosphore de façon à obtenir des bielles sécables.

Avec des températures de réchauffage du lopin supérieures à AC₃ et de préférence à 1050°C, l'acier est toujours austénitique pendant le forgeage. Si, en fin de calibrage en contenu, la température est suffisante, c'est à dire supérieure au point Ar₃ de l'acier, le refroidissement contrôlé peut être effectué directement dans la chaude de calibrage. Dans le cas contraire, le traitement thermique est fait en différé, c'est à dire après retour à la température ambiante de l'ébauche de bielle forgée calibrée. Le traitement thermique comporte alors une austénitisation préalable au refroidissement contrôlé et peut être, par exemple, une normalisation.

Après traitement thermique et, éventuellement, grenaillage pour enlever la calamine et engendrer des contraintes de compression en surface, l'ébauche de bielle forgée calibrée est usinée.

L'usinage comporte, notamment, le dressage des faces latérales 10a et 10b du pieds 1, et des faces latérales 9a et 9b de la tête 4, l'usinage des alésages 2 et 5 du pieds 1 et de la tête 4, le perçage et le taraudage des trous destinés à recevoir les vis de fixation du chapeau.

Par rapport à l'art antérieur, l'usinage est plus léger, d'une part par ce que les cotes de l'ébauche sont proches des cotes finies, d'autre part, par ce qu'il n'est pas utile de faire un pré-usinage de la périphérie de l'ébauche, pré-usinage qui est indispensable dans l'art antérieur pour positionner convenablement l'ébauche sur les machines d'usinage.

Après usinage, le chapeau 8 est séparé du reste de la bielle par rupture fragile le long du plan P.

L'opération de calibrage en contenu consiste à disposer l'ébauche forgée de bielle 33, de préférence après l'avoir enduite de lubrifiant protecteur, dans l'évidement 34 d'une matrice 35 disposée sur le tas 36 d'une presse, et, par des opérations d'écrasement entre deux inserts 37 et 38 comportant chacun une emprunte 39, 40, à conférer à l'ébauche sa forme définitive. La forme de l'évidement 34 de la matrice 35 correspond exactement à la forme souhaitée pour la périphérie de l'ébauche de bielle forgée calibrée. Les empruntes 39 et 40 ont, en creux, la forme souhaitée pour les flancs de la bielle. L'insert supérieur 38 coulisse à l'intérieur de l'évidement 34 et comporte, à sa partie supérieure, un plateau 41 qui, en fin de calibrage, vient en butée contre la partie supérieure 42 de la matrice 35 de telle façon que l'écartement entre les deux inserts corresponde exactement à l'épaisseur souhaitée pour l'ébauche de bielle forgée calibrée. La quantité de métal (le poids et donc le volume) de l'ébauche forgée de bielle 33 étant toujours un peu plus élevée que ce qui est strictement nécessaire pour réaliser l'ébauche de bielle forgée calibrée, l'ensemble constitué par la matrice 35 et les deux inserts 37 et 38 comporte des moyens pour recevoir le métal en excédant sans affecter la précision de la forme de l'ébauche de bielle forgée calibrée. Plusieurs modes de réalisation sont possibles, en distinguant, par exemple, un mode de réalisation dans lequel les toiles 22 et 25 séparant les amorces d'alésage de la tête et du pieds ne sont pas enlevées avant calibrage, et un mode de réalisation dans lequel au moins la toile 22 est enlevées et dans lequel on calibre aussi au moins l'alésage 5 de la tête (si la toile 25 du pieds est enlevée, on peut aussi calibrer l'alésage 2 du pieds).

Dans le premier mode de réalisation, illustré à la figure 6, les toiles 22 et 25 de l'ébauche 34 (sur la figure, les inserts 37 et 38 étants représentés serrés, l'ébauche 34 représentée en coupe est une ébauche de bielle forgée calibrée) ne sont pas enlevées. Les empreintes 39 et 40 des inserts 37 et 38 comportent des bossages 43, 44, 45 et 46, destinés à imprimer la forme des amorces d'alésage 47a, 47b, 48a et 48b, de la tête et du pieds. L'épaisseur des bossages 43, 44, 45 et 46, est sensiblement plus faible que la profondeur des amorces d'alésage 47a, 47b, 48a et 48b (qui préexistent à l'opération de calibrage) de façon à laisser libre des espaces 50, 51, 52 et 53 qui peuvent recevoir le métal en excédant. Avec cette disposition, le métal en excédant par rapport au poids théorique souhaité pour la bielle, se retrouve dans les toiles 22 et 25 destinées à être enlevées, si bien que la géométrie externe de l'ébauche de bielle forgée calibrée n'en est pas affectée. On obtient ainsi des bielles ayant une très grande précision géométrique et en poids. Au lieu de prévoir des différences de profondeur entre les amorces d'alésages et les épaisseurs des bossages des empreintes des inserts, on peut prévoir, sur les bossages 43, 44, 45 et 46, et dans leurs axes, des évidements (non représentés) qui pourront recevoir le métal en excès.

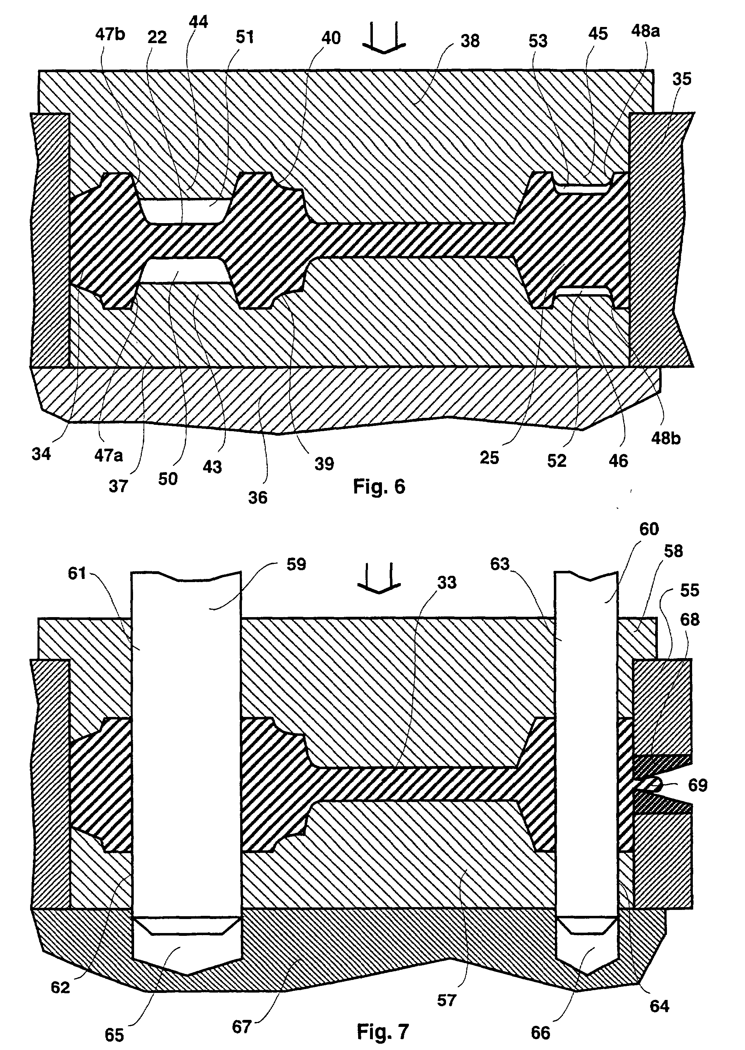

Dans un deuxième mode de réalisation (représenté à la figure 7), l'ébauche forgée de bielle est détoilée avant calibrage, et on calibre simultanément la géométrie externe de l'ébauche et les alésages de la tête et du pieds (on pourrait, par exemple, ne détoiler que la tête et ne calibrer que l'alésage correspondant). Le calibrage des alésages est réalisé en complétant la matrice 55 et les deux inserts 57 et 58 par des mandrins 59 et 60 coulissant dans des trous 61, 62, 63 et 64 ménagés dans les inserts 57 et 58 , et, éventuellement, dans des trous 65 et 66 percés dans le tas 67 de la presse. L'axe et le diamètre du premier mandrin 59 correspondent, respectivement, à l'axe et au diamètre de l'alésage de la tête. L'axe et le diamètre du deuxième mandrin 60 correspondent, respectivement, à l'axe et au diamètre de l'alésage du pieds. Lors du calibrage, le métal est serré non seulement contre la paroi interne de la matrice 55 et contre les empreintes des inserts 57 et 58, mais, également, contre les mandrins 59 et 60. On obtient, ainsi, un calibrage de la partie externe et des alésages de l'ébauche de bielle forgée calibrée. Cependant, en l'absence de dispositions particulières, le métal éventuellement en excédant ne pourrait pas s'échapper et la précision sur l'épaisseur, donc sur le poids, ne serait pas bonne. Aussi, on prévoit des moyens pour permettre au métal en excédant de s'échapper sans affecter la géométrie de l'ébauche de bielle forgée calibrée. Ces moyens sont, par exemple, du côté du pieds ou de l'extrémité de la tête, une filière 68 disposée dans la paroi de la matrice 55. La filière 68 est tronconique, évasée vers l'extérieur. Lors du calibrage, il se forme, dans la filière 68, une petite bavure 69 qui est sectionnée lors de l'extraction de l'ébauche de bielle forgée calibrée, après calibrage. Ces moyens peuvent être, également, des petits espaces 70, 71, laissés disponibles, dans la partie 72 de la matrice 55 (figure 7) correspondant à la tête de bielle, disposés, par exemple, dans l'axe des trous qui seront percés dans les oreilles pour faire passer les vis de fixation du chapeau sur le reste de la bielle. L'excédant de métal qui sera reporté dans ces zones sera, de toutes façons, enlevé lors du perçage des trous.

Les opérations de calibrage qui viennent d'être décrites permettent de calibrer l'ensemble de l'ébauche de bielle forgée. Mais, on peut limiter le calibrage à la tête uniquement, ou à la tête et au pieds. L'essentiel est que les caractéristiques d'une bielle de précision décrites plus haut soient respectées, en particulier le poids.

Le calibrage étant effectué chaud, l'Homme du Métier comprendra que pour déterminer la géométrie exacte des outillages, il est nécessaire de tenir compte des dilatations thermiques, et qu'il est préférable de faire en sorte que, au cours d'une fabrication, la température des outillages reste le plus stable possible.

L'opération de calibrage se distingue des opérations de forgeage classiques, notamment par le fait que les écoulements de métal se font avec des déformations faibles, inférieures à 10%, contre au minimum plusieurs dizaines de % pour les opérations de forgeage classiques. Elle s'en distingue également par le fait qu'elle se fait sans formation de bavures. Enfin, elle permet d'obtenir des dépouilles inférieures à 0,5° contre 3° au minimum pour les ébauches forgées.

L'opération d'écrasement à l'avantage, non seulement de conférer à la périphérie de la bielle une géométrie précise, mais, également, d'ajuster l'épaisseur de la tête et du pieds, et d'assurer un dressage de la bielle. Cela permet, notamment, de réduire, voir de supprimer, certaine opérations d'usinage.

Enfin, l'opération de calibrage permet d'obtenir une très bonne qualité des zones de raccordement 12 du corps 3 de la bielle avec le pieds 1. Cette qualité augmente de façon significative la tenue à la fatigue de la bielle.

L'invention s'applique aussi bien à des bielles entièrement calibrées (dont toute la périphérie est calibrée) qu'à des bielles dont on ne calibre que certaines zones précises servant de surfaces de référence. En particulier, le corps de la bielle n'est pas toujours complètement calibré. La matrices et les inserts sont alors dessinés en conséquence.

Les bielles peuvent ne pas être sécables et le chapeau séparé du corps de la bielle par usinage. Dans ce cas, l'alésage de la tête de l'ébauche de bielle n'est pas circulaire, mais ovale (deux demi cercles reliés par deux segments de droites) de façon à prendre en compte l'épaisseur de l'usinage. La matrice, les inserts et, éventuellement, le mandrin correspondant ont, alors, une forme adaptée en conséquence.

Enfin, le forgeage peut être effectué à mi-chaud (après réchauffage à une température inférieure à AC₃). Dans ce cas, le traitement thermique doit être effectué en différé.

L'invention s'applique à tout type de bielle ainsi qu'à tout type de pièce forgée comparable.

## Revendications

1. Procédé de fabrication d'une bielle forgée du type comprenant une tête (4), un corps (3) et un pied (1), selon lequel:
- on fabrique par forgeage une ébauche forgée de bielle (33) exempte de bavures latérales et comportant sur la tête et sur le pieds, au moins une amorce d'alésage de l'alésage (5) de la tête (4) et de l'alésage (2) du pied (1),
- et on calibre en contenu l'ébauche forgée de bielle (33) par écrasement de ladite ébauche forgée de bielle entre deux inserts (57,58) à l'intérieur d'une matrice (55), pour obtenir une ébauche de bielle forgée calibrée (34), la position relative de la matrice (55) et d'un premier insert (57) étant fixée, le deuxième insert (58) étant mobile par rapport à la matrice (55), en fin de calibrage la position du deuxième insert (58) étant déterminée indépendamment du volume de métal de l'ébauche forgée de bielle (33), la matrice (55) et le premier insert (57) étant en appui sur le tas (67) d'une presse, le deuxième insert (58) coulissant à l'intérieur de la matrice (55), l'ensemble constitué par la matrice (55) et les deux inserts (57,58) comportant au moins un moyen (68) pour recevoir du métal en excédant de l'ébauche forgée de bielle (33), sans affecter la précision de la forme de l'ébauche de bielle forgée calibrée (34),
**caractérisé en ce que** le deuxième insert (58) comporte une butée (41) qui, en fin de calibrage, vient en appuis sur la matrice (35), de façon à fixer avec précision la position relative des deux inserts (57,58), **en ce que** on calibre au moins l'alésage (5) de la tête (4), et, éventuellement, l'alésage (2) du pieds (1), en utilisant une ébauche forgée de bielle (33) dont on a, au préalable, enlevé au moins la toile (22) de la tête (17), et, éventuellement, la toile (25) du pieds (19), et **en ce que** le moyen pour recevoir du métal en excédant de l'ébauche forgée de bielle (33) est constitué d'au moins une filière (68) disposée dans la paroi de la matrice (55) et débouchant vers l'extérieur.

2. Procédé selon la revendication 1 **caractérisé en ce que**, pour calibrer l'alésage (5,2) de la tête (4) ou du pieds (1), on dispose, dans l'alésage de l'ébauche forgée de bielle (33), un mandrin (59,60) pouvant coulisser dans des trous (61,62,63,64) réalisés dans les inserts (57,58) et situés dans l'axe de l'alésage, puis, on effectue le calibrage.

3. Procédé selon la revendications 1 ou la revendication 2 **caractérisé en ce qu'**il comporte, en outre, une opération de traitement thermique de l'ébauche de bielle calibrée.

4. Procédé selon la revendication 3 **caractérisé en ce que** la bielle est constituée d'un acier dont la composition chimique comprend, en poids, moins de 10% d'éléments d'alliage, **en ce que** le forgeage de l'ébauche est effectué à chaud, à une température supérieure à 1050°C et **en ce que** l'opération de calibrage est effectuée dans la chaude de forgeage.

5. Procédé selon la revendication 4 **caractérisé en ce que** la température de fin de calibrage est supérieure à la température Ar₃ de l'acier, et **en ce que** le traitement thermique est effectué dans la chaude de calibrage.

6. Procédé selon la revendication 4 **caractérisé en ce que** le traitement thermique comporte au moins un refroidissement contrôlé à une vitesse de refroidissement inférieure à 10°C/s afin d'obtenir une structure perlitique ou ferrito-perlitique.

7. Procédé selon la revendication 4 **caractérisé en ce que** le traitement thermique comporte au moins un refroidissement contrôlé à une vitesse de refroidissement supérieure à 0,5°C/s afin d'obtenir une structure contenant plus de 60% de bainite.

8. Procédé selon la revendication 3 **caractérisé en ce que** le traitement thermique est une normalisation destinée à obtenir une structure perlitique ou ferrito-perlitique.

9. Procédé selon l'une quelconque des revendications 4 à 8 **caractérisé en ce que** l'acier est un acier permettant d'obtenir une bielle sécable.

10. Procédé selon l'une quelconque des revendications 1 à 9 **caractérisé en ce que** l'ébauche forgée de bielle est obtenue par estampage ou par matriçage d'une pré-ébauche.

11. Procédé selon la revendication 10 **caractérisée en ce que** la pré-ébauche est obtenue par laminage de préforme d'un lopin.

## Claims

1. Method for the manufacture of a forged connecting rod of the type comprising a big end (4), a shank (3) and a small end (1), according to which:
- there is manufactured by forging a forged connecting rod blank (33) which is free from lateral flash and which comprises, on the big end and on the small end, at least one pre-bore of the bore (5) of the big end (4) and of the bore (2) of the small end (1),
- and the forged connecting rod blank (33) is calibrated in a contained manner by pressing the forged connecting rod blank between two inserts (57, 58) inside a forging die (55) to obtain a calibrated forged connecting rod blank (34), the relative position of the forging die (55) and of a first insert (57) being fixed, the second insert (58) being mobile relative to the forging die (55), at the end of the calibrating operation the position of the second insert (58) being determined independently of the volume of metal of the forged connecting rod blank (33), the forging die (55) and the first insert (57) being supported on the anvil (67) of a press, the second insert (58) sliding inside the forging die (55), the whole constituted by the forging die (55) and the two inserts (57, 58) comprising at least one means (68) for receiving excess metal from the forged connecting rod blank (33), without affecting the precision of the form of the calibrated forged connecting rod blank (34),
**characterised in that** the second insert (58) comprises an abutment (41) which, at the end of the calibrating operation, is supported on the forging die (35) in such a manner as to fix with precision the relative position of the two inserts (57, 58), **in that** at least the bore (5) of the big end (4) and, optionally, the bore (2) of the small end (1) are calibrated, using a forged connecting rod blank (33) from which at least the web (22) in the big end (17) and, optionally, the web (25) in the small end (19) have been removed beforehand, and **in that** the means for receiving excess metal from the forged connecting rod blank (33) is constituted by at least one die plate (68) arranged in the wall of the forging die (55) and opening out towards the outside.

2. Method according to claim 1, **characterised in that**, in order to calibrate the bore (5, 2) of the big end (4) or of the small end (1), a mandrel (59, 60) that can slide in holes (61, 62, 63, 64) formed in the inserts (57, 58) and arranged on the axis of the bore is arranged in the bore of the forged connecting rod blank (33), then the calibrating operation is carried out.

3. Method according to claim 1 or claim 2, **characterised in that** it also comprises an operation for the thermal treatment of the calibrated connecting rod blank.

4. Method according to claim 3, **characterised in that** the connecting rod is constituted by a steel whose chemical composition comprises, by weight, less than 10% of alloy elements, **in that** the forging of the blank is carried out at elevated temperature, at a temperature higher than 1050°C, and **in that** the calibrating operation is carried out at the forging heat.

5. Method according to claim 4, **characterised in that** the temperature at the end of the calibrating operation is higher than the temperature Ar₃ of the steel, and **in that** the thermal treatment is carried out at the calibration heat.

6. Method according to claim 4, **characterised in that** the thermal treatment comprises at least one controlled cooling operation at a cooling rate lower than 10°C/s in order to obtain a perlitic or ferrito-perlitic structure.

7. Method according to claim 4, **characterised in that** the thermal treatment comprises at least one controlled cooling operation at a cooling rate higher than 0.5°C/s in order to obtain a structure containing more than 60% of bainite.

8. Method according to claim 3, **characterised in that** the thermal treatment is a normalisation intended to obtain a perlitic or ferrito-perlitic structure.

9. Method according to any one of claims 4 to 8, **characterised in that** the steel is a steel enabling a splittable connecting rod to be obtained.

10. Method according to any one of claims 1 to 9, **characterised in that** the forged connecting rod blank is obtained by drop-forging or by forming a pre-blank.

11. Method according to claim 10, **characterised in that** the pre-blank is obtained by rolling a pre-form from a billet.

## Patentansprüche

1. Verfahren zur Herstellung eines geschmiedeten Rohlings für eine Pleuelstange des Typs, der einen Kopf (4), einen Körper (3) und einen Fuß (1) umfasst, wonach:
- man durch Schmieden einen geschmiedeten Rohling einer Pleuelstange (33) frei von seitlichen Graten herstellt, der an dem Kopf und an dem Fuß wenigstens einen ersten Durchbruch für eine Bohrung (5) des Kopfs (4) und eine Bohrung (2) des Fußes (1) aufweist,
- man kalibriert den Inhalt des geschmiedeten Rohlings der Pleuelstange (33) durch Stauchen des geschmiedeten Rohlings der Pleuelstange zwischen zwei Einsätzen (57, 58) im Inneren einer Matrize (55), um einen kalibrierten Rohling einer geschmiedeten Pleuelstange (34) zu erhalten, wobei die relative Position der Matrize (55) und eines ersten Einsatzes (57) fix ist und der zweite Einsatz (58) beweglich ist in Bezug auf die Matrize (55), wobei am Ende der Kalibrierung die Position des zweiten Einsatzes (58) fest liegt, unabhängig von dem Volumen des Metalls des geschmiedeten Rohlings der Pleuelstange (33), wobei die Matrize (55) und der erste Einsatz (57) zur Auflage kommen auf dem Unterbau (67) einer Presse, wobei der zweite Einsatz (58) im Inneren der Matrize (55) gleitet, und das ganze bestehend aus der Matrize (55) und den beiden Einsätzen (57, 58) wenigstens ein Element (68) umfasst, um überschüssiges Metall des geschmiedeten Rohlings der Pleuelstange (33) aufzunehmen, ohne die Präzision der Form des geschmiedeten kalibrierten Rohlings der Pleuelstange (34) ungünstig zu beeinflussen,
**dadurch gekennzeichnet, dass** der zweite Einsatz (58) einen Anschlag (41) umfasst, der am Ende der Kalibrierung an der Matrize (55) zur Auflage kommt, derart, dass die relative Position der beiden Einsätze (57, 58) genau fixiert wird, damit man wenigstens die Bohrung (5) des Kopfs (4) und gegebenenfalls die Bohrung (2) des Fußes (1) kalibriert, unter Verwendung eines geschmiedeten Rohlings einer Pleueistange (33), bei dem man zuvor wenigstens eine Wand (22) des Kopfs (17) und gegebenenfalls die Wand (25) des Fußes (19) entfernt hat, wobei das Element für die Aufnahme von überschüssigem Metall des geschmiedeten Rohlings der Pleuelstange (33) aus wenigstens einer Düse (68) besteht, die in der Seitenwand der Matrize (55) angeordnet ist und nach außen hin mündet.

2. Verfahren nach Anspruch 1, **dadurch gekennzeichnet, dass** man zur Kalibrierung der Bohrung (5, 2) des Kopfs (4) oder des Fußes (1) in der Bohrung des geschmiedeten Rohlings der Pleuelstange (33) einen Dorn (59, 60) anordnet, der In den Löchern (61, 62, 63, 64) in den Einsätzen (57, 58) gleiten kann und sich in der Achse der Bohrung bewegt, und dass man danach die Kalibrierung durchführt.

3. Verfahren nach Anspruch 1 oder Anspruch 2, **dadurch gekennzeichnet, dass** es außerdem einen Arbeitsschritt der thermischen Behandlung des kalibrierten Rohlings der Pleuelstange umfasst.

4. Verfahren nach Anspruch 3, **dadurch gekennzeichnet, dass** die Pleuelstange aus Stahl besteht, dessen chemische Zusammensetzung an Gewicht wenigstens 10 % Legierungselemente umfasst, wobei das Schmieden des Rohlings in der Wärme bei einer Temperatur oberhalb von 1.050°C erfolgt und wobei der Arbeitsschritt der Kalibrierung In der Wärme des Schmiedevorgangs ausgeführt wird.

5. Verfahren nach Anspruch 4, **dadurch gekennzeichnet, dass** die Temperatur am Ende der Kalibrierung oberhalb der Temperatur Ar₃ des Stahls liegt, wobei die thermische Behandlung in der Wärme der Kalibrierung durchgaführt wird.

6. Verfahren nach Anspruch 4, **dadurch gekennzeichnet, dass** die thermische Behandlung wenigstens eine kontrollierte Abkühlung umfasst mit einer Abkühlgeschwindigkeit unterhalb von 10°C/Sekunde, um eine perlitische oder ferrito-perlitische Struktur zu erhalten.

7. Verfahren nach Anspruch 4, **dadurch gekennzeichnet, dass** die thermische Behandlung wenigstens eine kontrollierte Abkühlung bei einer Geschwindigkeit der Abkühlung oberhalb von 0.5°C/Sekunde umfasst, um eine Struktur zu erhalten, die mehr als 60 % an Bainlt enthält.

8. Verfahren nach Anspruch 3, **dadurch gekennzeichnet, dass** die thermische Behandlung eine Normalisierung ist, dazu bestimmt, eine perlitische oder ferrito-perlitische Struktur zu erhalten.

9. Verfahren nach einem der Ansprüche 4 bis 8, **dadurch gekennzeichnet, dass** der Stahl ein Stahl ist, der es ermöglicht, eine teilbare Pleuelstange zu erhalten.

10. Verfahren nach einem der Ansprüche 1 bis 9, **dadurch gekennzeichnet, dass** der geschmiedete Rohling der Pleuelstange erhalten wird durch Warmfließpressen oder Gesenkschmieden eines Vorrohlings.

11. Verfahren nach Anspruch 10, **dadurch gekennzeichnet, dass** der Vorrohling erhalten wird durch Walzen der Vorform aus einem Werkstück-Rohling.
